# EUROPÄISCHE PATENTSCHRIFT

(11) **EP 4 110 642 B1**
(45) Veröffentlichungstag und Bekanntmachung des Hinweises auf die Patenterteilung: **23.08.2023**
(21) Anmeldenummer: 22727042.8
(22) Anmeldetag: 29.04.2022
(51) Int. Cl.: B60K 35/00, B62D 1/04, B60K 37/06

(54) **LENKRAD MIT EINER GEGENÜBER EINEM MANTELROHR DREHBAREN NABE**
STEERING WHEEL HAVING A HUB WHICH IS ROTATABLE WITH RESPECT TO A JACKET TUBE
VOLANT DE DIRECTION DOTÉ D'UN MOYEU POUVANT TOURNER PAR RAPPORT À UN TUBE DE CHEMISE

(30) Priorität: 18.05.2021 DE 102021002596
(43) Veröffentlichungstag der Anmeldung: 04.01.2023
(73) Patentinhaber: Mercedes-Benz Group AG, 70372 Stuttgart (DE)
(72) Erfinder: Huang, Mei, 69124 Heidelberg (DE)
(74) Vertreter: Novagraaf Group
(86) Internationale Anmeldenummer: PCT/EP2022/061554
(87) Internationale Veröffentlichungsnummer: WO 2022/243013

(56) Entgegenhaltungen:
- DE-A1-102014 205 707
- DE-A1-102015 200 907
- DE-A1-102019 212 507
- US-A1- 2014 062 891

## Beschreibung

Die Erfindung betrifft ein Lenkrad mit einer gegenüber einem Mantelrohr drehbaren Nabe nach der im Oberbegriff von Anspruch 1 näher definierten Art.

Lenkräder zum Steuern eines Fahrzeugs sind aus dem allgemeinen Stand der Technik bekannt. Dabei können beispielsweise im Bereich der sogenannten Speichen eines Lenkrads Taster und Schalter angeordnet werden, um Funktionen des Fahrzeugs bedienen zu können, ohne die Hände vom Lenkrad nehmen zu müssen. Darüber hinaus sind in einem Fahrzeug zahlreiche Anzeige- und Bedienelemente bekannt. Die DE 102 14 606 A1 geht nun den Weg, diese beiden Funktionalitäten miteinander zu verbinden und positioniert ein Display im Zentrum eines Lenkrads, also in dem Bereich, welcher typischerweise als Nabe bezeichnet wird. Das Display im Bereich der Nabe ist dabei so ausgestaltet, dass die Anzeigefläche für die Anzeigeelemente unabhängig von der Stellung des Lenkrads, also unabhängig von dessen Drehwinkel, gleich bleibt.

Ein ähnliches Design greift auch die WO 01/58713 A1 auf. Darin ist ein Lenkrad mit einem Display im Bereich der sogenannten Nabe beschrieben, wobei dieses Display als druckempfindliche Displayeinheit ausgebildet ist, welche also über ein unter dem Display angeordnetes X-Y Touchpad, wie es in der internationalen Veröffentlichung ausgeführt ist, gesteuert werden kann. Auch hier wird eine Nachführung des Inhalts analog zu der Vorgehensweise in der oben genannten deutschen Veröffentlichung beschrieben, so dass also auch hier unabhängig vom Drehwinkel des Lenkrads die Inhalte auf dem berührungsempfindlichen Display bezüglich ihrer Position konstant gehalten werden.

Die DE 10 2019 211 657 A1 offenbart eine Lenkeinheit mit einer radial um die Drehachse angeordneten Anzeigeeinrichtung, wobei eine Innenkontur der Anzeigeeinrichtung die Lenksäule als ein Ring oder als ein Rahmen vollständig umschließt.

Aus der US 2014/062891 A1 ist ein Lenkrad mit einem berührungsempfindlichen Display bekannt, das zwischen einer Nabe und einem Lenkkranz angeordnet ist.

Die DE 10 2019 212507 A1 offenbart eine Lenkradbaugruppe für ein Kraftfahrzeug mit mindestens einem Griffabschnitt eines Lenkradesund einem zentralen Lenkradbereich, der mit dem mindestens einen Griffabschnitt verbunden ist, wobei der mindestens ein Griffabschnitt zusammen mit dem zentralen Lenkradbereich eine dem Fahrer zugewandte Deckfläche der Lenkradbaugruppe definiert. An der Lenkradbaugruppe ist ein Rollo angeordnet, mittels dessen Rollbahn die Deckfläche zumindest teilweise überdeckt werden kann. Eine elastische und lichtdurchlässige Rollbahn ermöglich dabei eine Bedienung eines von der Rollbahn überdeckten Touch-Displays.

Aus der DE 10 2014 205707 A1 ist eine ein Lenkelement aufweisende Lenkeinrichtung für ein Kraftfahrzeug bekannt, die ein zumindest bereichsweise berührempfindliches Anzeigeelement umfasst. Das Anzeigeelement weist weiter einen für eine Eingabe aktivierbaren Berührbereich auf, der abhängig von einem Lenkwinkel des Lenkelements um die Drehachse auf dem Anzeigeelement verlagerbar ist.

Die DE 10 2014 205707 A1 offenbart ein Lenkrad mit einer transparenten berührungsempfindlichen Eingabevorrichtung, die eine als Flüssigkeitskristalldisplay ausgeführte Anzeigefläche und ein Touchpanel aufweist. Die Eingabevorrichtung ist eingerichtet einen Anzeigeinhalt eines im Armaturenbrett eines Fahrzeugs angeordneten weiteren Displays wiederzugeben, wobei der auf der Anzeigefläche der Eingabevorrichtung wiedergegebene Inhalt über das Touchpanel der Eingabevorrichtung bedienbar ist.

Die Aufgabe der hier vorliegenden Erfindung besteht nun darin, ein alternatives Lenkrad mit der Möglichkeit zur Integration eines berührungsempfindlichen Displays zu schaffen, welches in der Lage ist, eine Vielzahl von Anzeige- und/oder Bedienelementen bereitzustellen.

Erfindungsgemäß wird diese Aufgabe durch ein Lenkrad mit den Merkmalen im Anspruch 1, und hier insbesondere im kennzeichnenden Teil des Anspruchs 1 gelöst. Vorteilhafte Ausgestaltungen und Weiterbildungen ergeben sich dabei aus den hiervon abhängigen Unteransprüchen.

Die erfindungsgemäße Lösung sieht es vor, dass das Lenkrad eine Nabe und einen zumindest teilweise umlaufenden Lenkkranz in der auch im Stand der Technik üblichen Art aufweist. Außerdem ist ein berührungsempfindliches Display vorgesehen. Das berührungsempfindliche Display ist als ein ein- oder mehrteiliges Display ausgeführt und um zumindest einen Teil des Umfangs des Lenkrads zwischen der Nabe und dem Lenkkranz angeordnet, und zwar zumindest in dem bei einer Geradeausfahrt oberen Bereich des Lenkrads. Ein solch berührungsempfindliches Display zwischen dem Lenkkranz einerseits und der Nabe des Lenkrads andererseits ermöglicht eine relativ große Fläche zur Anzeige und Bedienung von Anzeige- und Bedienelementen und hält gleichzeitig den Bereich des Lenkkranzes für ein zuverlässiges Greifen desselben frei. Außerdem wird die Nabe freigehalten, so dass hier beispielsweise an der üblichen und für viele Personen erwarteten Stelle die Betätigung der Fahrzeughupe platziert werden kann, und dass insbesondere der für die Sicherheit einer das Fahrzeug fahrenden Person hochrelevante Airbag im Bereich der Nabe positionierbar ist. Die dem berührungsempfindlichen Display zugeordnet Bediensteuerung ordnet einer Berührposition auf der Bedienfläche ein mit der Berührung betätigtes Bedienelement zu. Im Prinzip ermittelt die Bediensteuerung Berührkoordinaten, bestimmt welches Bedienelement der durch die Koordinaten bestimmten Position auf der Anzeigefläche entspricht und löst die dem Bedienelement zugeordnete Funktion aus. In vorteilhafter Weise entspricht die Abmessung der Bedienfläche zumindest der der Anzeigefläche, so dass alle Positionen auf der Anzeigefläche anwählbar sind.

Das berührungsempfindliche Display in dem erfindungsgemäßen Aufbau des Lenkrads nutzt dann also die zwischen der Nabe und dem Lenkkranz verbleibende Fläche. Durch die relativ große nun zur Verfügung stehende Fläche lassen sich im Bereich des berührungsempfindlichen Displays des erfindungsgemäßen Lenkrads zahlreiche Anzeigeelemente und Funktionalitäten unterbringen. Damit ist es beispielsweise möglich, auf das sonst bei vielen Fahrzeugen übliche aus Blickrichtung einer das Fahrzeug fahrenden Person hinter dem Lenkrad angeordnete Cockpit mit seinen Anzeigeinstrumenten für Geschwindigkeit, Drehzahl, Tankfüllung und dergleichen zu verzichten. Diese Anzeigeelemente lassen sich nun bei dem zumindest in der oberen Hälfte des Lenkrads angeordneten berührungsempfindlichen Display des erfindungsgemäßen Lenkrads einfach und effizient dort abbilden, so dass sie für eine das Fahrzeug fahrende Person quasi an der gewohnten Stelle zu finden sind, tatsächlich jedoch im Lenkrad selbst und eben nicht hinter dem Lenkrad dargestellt werden. Dies ermöglicht dann, wie erwähnt, den Verzicht auf das eigentliche Cockpit und erlaubt eine ideale Ausnutzung des zwischen dem Lenkkranz und der Nabe des Lenkrads befindlichen Bauraums. Anders als bei einem herkömmlichen Cockpit werden so die Anzeigeelemente auch bei stärkerem Lenkeinschlag nicht durch die Speichen des Lenkrads verdeckt.

Erfindungsgemäß ist bei dem beschriebenen Aufbau vorgesehen, dass das berührungsempfindliche Display aus einer transparenten berührungsempfindlichen Bedienfläche und einer in Blickrichtung auf das berührungsempfindliche Display beabstandet dahinter angeordneten Anzeigefläche ausgebildet ist. Die Bedienfläche und die Anzeigefläche sind also nicht wie bei berührungsempfindlichen Displays allgemein üblich, miteinander verbunden, sondern sind voneinander beabstandet. Dieser Abstand kann lediglich ein relativ kleiner Abstand von weniger als einem Millimeter sein, um die Bedienfläche einerseits und die Anzeigefläche andererseits beispielsweise gegeneinander beweglich zu machen. Der Abstand kann jedoch auch ein größerer Abstand sind, so dass beispielsweise die Anzeigefläche bewusst mit einem größeren Abstand hinter der Bedienfläche angeordnet ist, um so quasi den Blick auf ein herkömmliches Cockpit und die dabei entstehende Tiefenwirkung zu simulieren und dennoch in der Ebene des Lenkrads, in welcher dann die Bedienfläche angeordnet ist, eine entsprechende Bedienung der dahinter liegenden Elemente zu ermöglichen oder lediglich einen Durchblick auf die dahinter liegenden angezeigten Elemente zu erlauben, während gleichzeitig, beispielsweise im Randbereich der Anzeige des "virtuellen Cockpits" bedienbare Elemente auf der Bedienfläche angeordnet sind.

In einer weiteren Ausgestaltung ist die Bediensteuerung derart eingerichtet, dass mit einer Berührung einer Position auf der Bedienfläche ein in Blickrichtung auf eine Berührposition ein auf der Anzeigefläche sichtbares, in Blickrichtung liegendes Objekt bedienbar ist. Mit anderen Worten ist das Objekt auf das der Blick gerichtet ist, auf der Bedienfläche an der vom Blickstrahl getroffenen Position bedienbar. Zum Ausgleich der Veränderung der Berührposition auf der Bedienfläche aufgrund Veränderung der Position eines Nutzers (Parallaxe) zur Anzeige- und Bedienfläche wird die Berührposition insbesondere bei größerer Beabstandung von Anzeige- und Bedienfläche kompensiert. Dazu wird beispielsweise mittels Sensoren wie einer Kamera eine Positionsabweichung insbesondere eine Positionsabweichung der Augen des Betrachters von einer vorgegebenen, keine Kompensation erfordernden Position ermittelt und in Abhängigkeit der Abweichung von der vorgegebenen Position ein Korrekturwert für die Bedienposition bestimmt, auf Basis dessen eine Bedienposition nachgeführt wird, so dass unabhängig von der Augenposition des Betrachters die in Blickrichtung gelegenen Objekte an einer in Blickrichtung liegenden Position der Bedienfläche bedienbar ist. Der Korrekturwert wird beispielsweise kontinuierlich berechnet oder eine Tabelle entnommen.

Gemäß einer besonders günstigen Ausgestaltung des erfindungsgemäßen Lenkrads kann das Display dabei als Kreisring oder wenigstens ein Kreisringabschnitt konzentrisch zu der Nabe und/oder dem Lenkkranz ausgebildet sein. Je nach Größe und Anordnung ist eine solche Ausgestaltung als Kreisring oder als Kreisringabschnitt beispielsweise konzentrisch zu der Nabe eine besonders effiziente Möglichkeit den zur Verfügung stehenden Bauraum zwischen der Nabe und dem Lenkkranz auszunutzen.

Der Aufbau kann dabei genauso konzentrisch zu dem Lenkkranz ausgebildet sein, welcher über weite Strecken typischerweise als konzentrischer Ring zur Nabe ausgebildet ist, jedoch beispielsweise in dem in Fahrtrichtung unteren oder seitlichen Bereich auch entsprechend abgeflacht realisiert sein kann, so dass bei diesem Fall die Ausgestaltung konzentrisch zu dem Lenkkranz eine andere Formgebung des Kreisringabschnitts ergibt als konzentrisch zu der Nabe, was jedoch der Funktionalität keinen Abbruch tut und vor allem als Teil des Innenraumdesigns eines Fahrzeugs zu entscheiden wäre.

Wie oben bereits erwähnt kann der Abstand zwischen der Bedienfläche einerseits und der Anzeigefläche andererseits dazu dienen, dass diese gegeneinander beweglich sind. Gemäß einer außerordentlich günstigen Weiterbildung des erfindungsgemäßen Lenkrads kann es dementsprechend vorgesehen sein, dass die Bedienfläche drehfest mit dem Lenkkranz und der Nabe verbunden ist, sich also mit dem Lenkrad bei einer Betätigung entsprechend mitdreht, während die Anzeigefläche drehfest mit dem Mantelrohr verbunden ist, und damit auch bei einer Drehbewegung des Lenkrads entsprechend stillsteht. Die Bedienfläche und die Anzeigefläche würden sich in dieser besonders günstigen Ausgestaltung des erfindungsgemäßen Aufbaus also gegeneinander drehen, was verschiedenartige neue Anwendungsmöglichkeiten ergibt.

Gemäß einer außerordentlich günstigen Weiterbildung dieser Variante des erfindungsgemäßen Lenkrades kann es dabei vorgesehen sein, dass die Bediensteuerung, eine Änderung des Drehwinkels der Bedienfläche gegenüber der Anzeigefläche, d.h. gegenüber den ortsfesten Anzeige- und Bedienelementen kompensiert. Dadurch ist es möglich, eine Berührposition an der Bedienfläche vom Drehwinkel unabhängig einer dahinterliegenden zum Mantelrohr ortsfesten Anzeigeposition auf der Anzeigefläche zuzuordnen. Durch diese Zuordnung ist es möglich, unabhängig von der Stellung des Lenkrades, also seinem Drehwinkel, in der gleichen Position immer dieselben Bedienelemente, welche durch eine entsprechende Anzeige von Anzeigeelementen auf der Anzeigefläche symbolisiert werden, bedienen zu können. Die den jeweiligen Anzeigeelementen zugeordneten berührungssensitiven Bereiche wandern also auf dem Display entgegen der Drehrichtung und liegen damit immer über den ihnen zugeordneten ortsfesten, d.h. von der Drehung des Lenkrads unabhängigen Anzeigeelementen oder Bedienelementen. Das Display ist damit analog bedienbar wie ein Display, das jeweils eine mit dem Mantelrohr verbundene Anzeigefläche und Bedienfläche aufweist.

In einer alternativen oder zusätzlichen Ausführungsform drehen die auf der mit dem Mantelrohr drehfest verbundenen Anzeigefläche angezeigten Elemente mit der lenkradfesten Bedienfläche mit, d.h. ist damit analog bedienbar wie ein Display, das jeweils ein mit Lenkradkranz verbundene Anzeigefläche und Bedienfläche aufweist. Damit kann beispielsweise ein Objekt auf der Bedienfläche mit einem am Lenkradkranz positionierten Daumen einer den Lenkradkranz an einer Position umgreifenden Hand unabhängig vom Lenkwinkel mit einer annährend gleichen Bewegung erreicht werden. In einer bevorzugten Ausführungsform werden die zwei vorab beschriebenen Varianten kombiniert, d.h. bei Drehung des Lenkradkranzes drehen einige Anzeige- oder Bedienelemente auf der Anzeigefläche mit dem Lenkradkranz mit und andere Elemente bleiben auf der Anzeigefläche fest positioniert.

Eine alternative Ausgestaltung kann es auch vorsehen, dass das berührungsempfindliche Display als Ganzes, also sowohl die Bedienfläche als auch die Anzeigefläche drehfest mit dem Lenkkranz und der Nabe verbunden sind. Ähnlich wie im Stand der Technik dreht sich hier also das gesamte Display mit dem Lenkrad, bietet jedoch die oben schon beschriebenen Vorteile einer effizienten Nutzung des Airbags im Bereich der Nabe des Lenkrads und der größeren Anzeigefläche, was zu einer Einsparung des Fahrzeug-Cockpits im herkömmlichen Sinn genutzt werden kann, ohne dass die im Cockpit befindlichen Anzeigeelemente ihre für eine das Fahrzeug nutzende Person gewohnte Sichtbarkeit an der erwarteten Stelle verlassen. Ein Ausgleich von Parallaxeneffekten erfolgt wie vorab beschrieben entsprechend auch bei dieser Anordnung.

Auch bei dieser Variante des berührungsempfindlichen Displays kann gemäß einer außerordentlich günstigen Weiterbildung hiervon eine Bediensteuerung vorgesehen sein, welche dazu eingerichtet ist, für zumindest einige der auf der berührungsempfindlichen Display angezeigten Bedienelemente und/oder Anzeigeelemente eine Änderung des Drehwinkels des Lenkrades zu kompensieren. Dies bedeutet also, dass diese Bedien- und/oder Anzeigeelemente auch bei einem Drehen des Lenkrads ortsfest angezeigt werden, sie werden von der Bediensteuerung also auf dem Display um den Drehwinkel des Lenkrads entgegen dessen Drehbewegung verschoben, um so, vergleichbar wie im Stand der Technik, das immer selbe Anzeigebild für diese Elemente zu gewährleisten.

Gemäß einer weiteren sehr günstigen alternativen oder zusätzlichen Ausgestaltung des erfindungsgemäßen Lenkrads kann es nun auch vorgesehen sein, dass die Bediensteuerung dazu eingerichtet ist, zumindest einige auf dem Display angezeigte Bedienelemente drehfest zu dem Lenkkranz zu halten. Insbesondere wenn eine Kombination aus einer Anzeige der ansonsten im Fahrzeugcockpit befindlichen Anzeigeelemente und von Bedienelementen wie sie beispielsweise auf den Speichen eines Lenkrads üblich sind oder von anderen Bedienelementen, deren Anordnung im Bereich des Lenkrads sinnvoll wäre. So können nun die einen Elemente über die Bediensteuerung ortsfest gehalten werden, unabhängig vom Drehwinkel des Lenkrads. Andere Elemente, und dies betrifft insbesondere Bedienelemente, können nun zusammen mit dem Lenkkranz mitbewegt werden, sind also ortsfest zum Lenkkranz, so dass sie bei unveränderter Handhaltung bzw. bei unveränderter Position der Hand einer das Lenkrad nutzenden Person weiterhin effizient bedient werden können. In einer bevorzugten Ausführungsform wird die Position der Handhaltung am Lenkrad von Sensoren, d.h. von berührungsempfindlichen Sensoren wie kapazitiven Sensoren oder einer Kamera am Lenkradkranz bestimmt, beispielsweise berührungsempfindliche Bedienelemente oder Schaltfelder werden dabei bezogen auf die Position der Handhaltung im Aktionsbereich von bedienenden Daumen angeordnet, so dass die Bedienelemente mit dem Daumen bei beliebiger Position der Hand am Lenkrad und bei Drehung des Lenkrads immer bedienbar sind ohne die Hand vom Lenkrad wegnehmen zu müssen.

Die Objekte werden bevorzugt in Abhängigkeit einer Berührposition einer Hand am Lenkradkranz auf der Anzeigefläche angezeigt und mit der Drehung des Lenkradkranzes nachgeführt. In vorteilhafter Weise sind damit ausgewählte Objekte unabhängig von der Griffposition einer Hand am Lenkrad in gleichbleibendem Abstand zu der Hand positionierbar und mit einem Daumen jederzeit in gleicher Art und Weise bedienbar.

Die Kombination von Elementen, für welche der Drehwinkel kompensiert wird und andere Elemente, für die er dies nicht wird, ist eine besonders günstige Variante, welche bei der Größe des erfindungsgemäßen Displays einfach und effizient umzusetzen ist und einen hohen Nutzen bezüglich der Sicherheit und des Komforts für eine das Lenkrad bedienende Person ermöglicht.

In einer alternativen oder zusätzlichen Ausgestaltung dreht die Bediensteuerung Symbole, Anzeige- oder Bedienelemente, die zum dem Lenkkranz ortsfest angeordnet, d.h. zumindest für einen vorgegebenen Winkel mitgedreht werden, diese in ihrer

Ausrichtung so, dass beispielsweise bei einem rechteckigen Bedienelement dessen Kanten unabhängig vom Drehwinkel des Bedien- und/oder Anzeigeelements angezeigt werden, beispielsweise immer mit horizontalen Ober- und Unterkanten oder dergleichen. Mit anderen Worten wird die Ausrichtung der Symmetrieachsen der Symbole gegenüber der Horizontalen d.h. gegenüber einem künstlichen Horizontal bei Drehung des Lenkkranzes konstant gehalten und nicht verändert, indem die Symbole, d.h. die Bedien- und Anzeigeelemente um deren Zentrum, beispielsweise um einen Schwerpunkt gedreht werden. Die Symbole weisen in Bezug auf einen Nutzer eine gleichbleibende Ausrichtung auf, wodurch die Lesbarkeit der Symbolbezeichnung und damit deren gezielte Betätigung verbessert ist.

Die Bediensteuerung kann gemäß einer weiteren außerordentlich günstigen Ausgestaltung dieser Variante des erfindungsgemäßen Lenkrads ferner dazu eingerichtet sein, ab einem vorgegebenen Drehwinkel, welcher insbesondere bei circa 180° liegen kann, die Kompensation des Drehwinkels für alle auf der Anzeigefläche des berührungsempfindlichen Displays angezeigten bis zu diesem Winkel drehfest angezeigten Bedienelemente vorzunehmen. Das drehfeste Beibehalten von einzelnen Bedienelementen zum Lenkkranz kann also so gestaltet werden, dass dies innerhalb des normalen während der Fahrt benötigten Drehwinkels des Lenkrads von beispielsweise maximal bis zu 180°, welcher typischerweise auftritt, beizubehalten, so dass in allen normalen Fahrsituationen die Bedienung der ortsfest gegenüber dem Lenkkranz gehaltenen Bedienelemente weiterhin effizient und einfach möglich ist. Die Bediensteuerung kann dann bei einem größeren Drehwinkel, wie er häufig beispielsweise beim Rangieren, beim Einparken oder dergleichen auftritt, darauf verzichten und wiederum alle angezeigten Bedienelemente mit einer Kompensation des Drehwinkels, d.h. ortsfest gegenüber dem Mantelrohr anzeigen. In dieser Situation spielt die Bedienung derartiger Bedienelemente eine untergeordnete Rolle, so dass ab einem entsprechend großen Drehwinkel, von den beispielsweise schon mehrfach angesprochenen 180°, auf eine die zum Lenkkranz ortsfeste Anzeige leicht verzichtet werden kann, weil diese hier ggf. eher verwirrend auf eine das Lenkrad nutzende Person wirkt, als dass sie deren Komfort und Sicherheit steigert.

Gemäß einer außerordentlich günstigen Weiterbildung des erfindungsgemäßen Lenkrads ist es außerdem vorgesehen, dass die Nabe über wenigstens einen das berührungsempfindliche Display durchbrechenden oder in diesem oder zwischen zwei Teilen desselben sichtbaren Steg mit dem Lenkkranz verbunden ist. Typischerweise ist die Verbindung des Lenkkranzes mit der Nabe über einen Steg oder dergleichen notwendig. Dieser Steg kann nun insbesondere zwischen zwei Teilen des Displays ausgebildet sein, beispielsweise in dem zwei weitgehend horizontal verlaufende Stege zwischen einer oberen und einer unteren Hälfte des Displays die Nabe und den Lenkkranz verbinden. Ferner wären beispielsweise drei Stege denkbar, so dass das Display dann in drei zwischen den Stegen liegende Teile aufgeteilt werden müsste.

Daneben ist es auch möglich, das Display aus Blickrichtung der das Lenkrad nutzenden Person vor oder hinter den Stegen zu positionieren, so dass diese vor oder durch das Display hindurch sichtbar sind. Eine weitere Möglichkeit besteht darin, und dies ist insbesondere bei von der Nabe beispielsweise von schräg unten nach schräg oben zu dem Lenkkranz verlaufenden Stegen sinnvoll, wenn diese das Display entsprechend durchbrechen. Das Display hätte in diesem Fall beispielsweise eine seitlich eingebrachte Ausklinkung oder auch ein Loch, durch welche oder welches der Steg die Nabe und den Lenkkranz entsprechend verbinden kann.

Eine sehr vorteilhafte Weiterbildung dieser Variante mit dem Steg, und dies gilt insbesondere für die Variante, bei welcher der Steg zwischen Teilen des Displays oder aus Blickrichtung der das Lenkrad bedienenden Person vor dem Display angeordnet ist, kann es vorgesehen sein, dass auf den wenigstens einen Steg mechanische Schaltelemente angeordnet sind. Solche mechanischen Schaltelemente, welche beispielsweise auf dem Steg in der auch bisher schon üblichen Art und Weise angeordnet sein können, würden nun das Konzept des berührungsempfindlichen Displays entsprechend ergänzen, um so beispielsweise gewohnte Funktionen zur Steuerung einer Medienanlage, einer Telefonanlage, eines Tempomaten oder dergleichen auch weiterhin in den Steg zu integrieren und durch mechanische Schaltelemente zu realisieren.

Gemäß einer weiteren vorteilhaften Ausgestaltung des erfindungsgemäßen Lenkrads kann es dabei auch vorgesehen sein, dass das berührungsempfindliche Display mit einem Abstand zu dem Lenkkranz angeordnet ist, insbesondere einem Abstand, welcher für ein verbessertes Greifen des Lenkkranzes durch eine Person ausreicht.

Das berührungsempfindliche Display in einer der oben beschriebenen Ausgestaltungen kann wie erwähnt zwischen der Nabe und dem Lenkkranz positioniert werden. Hier entsteht ein relativ großer Bauraum für das Display. Gegebenenfalls wird jedoch die Ergonomie beim Greifen des Lenkkranzes durch ein bis zum Rand durchlaufendes Display unnötig eingeschränkt. Gemäß der beschriebenen vorteilhaften Weiterbildung kann es deshalb vorgesehen sein, dass zwischen dem Lenkkranz und dem Display ein Abstand vorgesehen ist. Dieser Abstand kann insbesondere so dimensioniert sein, dass er ein verbessertes Greifen des Lenkkranzes ermöglicht, also beispielsweise in der Art, dass der Abstand so groß ist, dass ein durchschnittlich großer und dicker Finger hindurch passt, um so ein vollständiges Umgreifen des Lenkkranzes trotz des berührungsempfindlichen Displays in allen oder zumindest einigen wichtigen Positionen des Lenkkranzes zu ermöglichen.

Weitere vorteilhafte Ausgestaltungen des erfindungsgemäßen Lenkrads ergeben sich auch aus den Ausführungsbeispielen, welche nachfolgend unter Bezugnahme auf die Figuren näher beschrieben sind.

Dabei zeigen:
- Fig. 1: verschiedene mögliche Varianten einer Ausgestaltung des erfindungsgemäßen Lenkrads;
- Fig. 2: eine erste mögliche Ausführungsform des berührungsempfindlichen Displays in dem erfindungsgemäßen Lenkrad;
- Fig. 3: eine mögliche Ansteuerung der Anzeige- und Bedienfläche bei der Ausgestaltung des Lenkrads gemäß Figur 2;
- Fig. 4: eine mögliche Ansteuerung der Anzeige- und Bedienfläche bei der Ausgestaltung des Lenkrads gemäß Figur 3;
- Fig. 5: eine mögliche Ansteuerung der Anzeige- und Bedienfläche bei der Ausgestaltung des Lenkrads gemäß Figur 4; und
- Fig. 6: Anpassung einer Bedienposition auf einer zu einer Anzeigefläche beanstandeten Bedienfläche.

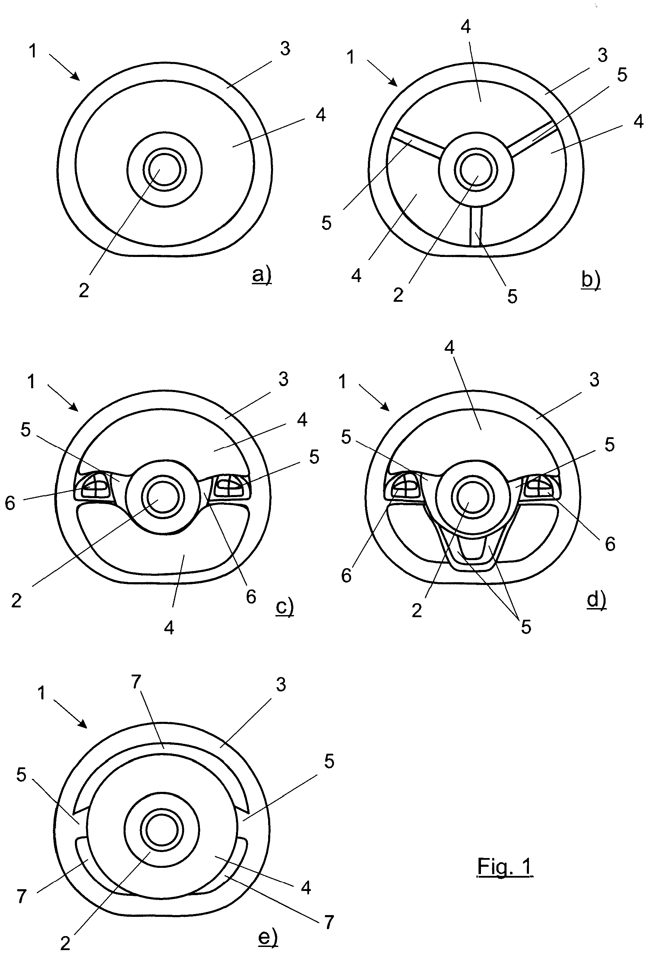

In der Darstellung der Figur 1 sind verschiedene mögliche Variante eines in seiner Gesamtheit mit 1 bezeichneten Lenkrads zu erkennen. Die in der Figur 1a dargestellte
Variante des Lenkrads 1 zeigt eine zentrale Nabe 2, welche mit einem dahinterliegenden hier nicht erkennbaren Mantelrohr verbunden ist, welches typischerweise auch Elemente wie einen Schalter für den Fahrtrichtungsanzeiger, für die Fahrzeugbeleuchtung und dergleichen trägt, welche ortsfest gegenüber dem mit seiner Nabe 2 drehbaren Lenkrad 1 angeordnet sind. Außen um das Lenkrad 1 ist ein Lenkkranz 3 angeordnet, welcher wie hier dargestellt, beispielsweise als im wesentlichen kreisförmiger Lenkkranz 3, hier mit einer Abplattung im unteren Bereich, bei der hier dargestellten Stellung für die Geradeausfahrt des Fahrzeugs ausgebildet ist. Der Lenkkranz 3 könnte auch aus einzelnen Segmenten bestehen, welche beispielsweise nur im horizontal rechten und linken Seitenbereich oder nur in der oberen Hälfte des Lenkrads oder auch nur in der unteren Hälfte desselben angeordnet sein könnten.

Zwischen dem Lenkkranz 3 und der Nabe 2 erstreckt sich in dem hier dargestellten Ausführungsbeispiel ein kreisringförmiges berührungsempfindliches Display 4, welches vorzugsweise den gesamten Raum zwischen der Nabe 2 im Zentrum und dem Lenkkranz 3 am äußeren Umfang des Lenkrads 1 einnimmt. Dieses berührungsempfindliche Display 4 kann einerseits zur Anzeige von Anzeigeelementen genutzt werden, beispielsweise zur Anzeige der ansonsten in einem aus Blickrichtung einer das Lenkrad 1 bedienenden Person hinter dem Lenkrad 1 liegenden Cockpit liegen würden, als auch für die Anzeigenrealisierung von Bedienelementen, welche auf dem berührungsempfindlichen Display 4 entsprechend angezeigt und betätigt werden könnten, beispielsweise virtuelle Schalter für eine Medienanlage, eine Telefonanlage, Fahrzeugfunktionen wie Geschwindigkeitsregler, Fahrassistenten und dergleichen.

In der Figur 1 sind weitere Designmöglichkeiten rein beispielhaft dargestellt, ohne alle denkbaren Varianten entsprechend zu präsentieren. Eine mögliche Variante in der Figur 1b zeigt rein beispielhaft drei Stege 5, welche den Lenkkranz 3 mit der Nabe 2 verbinden und innerhalb des Displays 4 sichtbar werden oder dieses in mehrere einzelne Kreissegmentabschnitte, wie es hier dargestellt ist, aufteilen.

In der Figur 1c ist eine weitere Variante gezeigt, bei welcher das Display 4 zweigeteilt ausgeführt ist, wobei ein Teil in dem bei der hier für die Geradeausfahrt dargestellten Stellung des Lenkrads 1 oben zwischen der Nabe 2 und dem Lenkkranz 3 angeordnet ist und der andere Teil unten. In der Figur 1d ist dann eine Variante zu erkennen, welche
auf den unteren Abschnitt des Displays 4 verzichtet und dieses lediglich oben verwendet.

Sowohl in der Darstellung der Figur 1c als auch in der Darstellung der Figur 1d sind dabei auf den beiden horizontal verlaufenden Stegen 5 mechanische Schaltelemente 6 wie beispielsweise Taster, Knöpfe, ein joystickähnliches Bedienfeld oder dergleichen angeordnet, wie es auch bei herkömmlichen Lenkrädern üblich ist.

In der Darstellung der Figur 1e ist eine weitere Variante dargestellte, welche sich für die Darstellung an der Figur 1a orientiert, welche jedoch für alle anderen Varianten die hier dargestellt ebenso denkbar ist. Die Besonderheit liegt hier in einem Abstand bzw. einer Lücke 7 zwischen dem Lenkkranz 3 und dem Display 4, welche insbesondere dazu geeignet ist, das eine das Lenkrad 1 bedienende Person den Lenkkranz 3 besser greifen kann, da die Finger dieser Person zumindest teilweise durch den entsprechenden Abstand bzw. die Lücke 7 zwischen dem Lenkkranz 3 und dem Display 4 hindurch greifen können, um so den Lenkkranz 3 sicher und zuverlässig zu umgreifen. Wie bereits erwähnt ließen diese Varianten sich auch bei allen anderen Anordnungen des Displays 4 in dem Lenkrad 1 entsprechend realisieren, sowohl bei hier dargestellten Möglichkeiten als auch bei allen anderen denkbaren Ausgestaltungen.

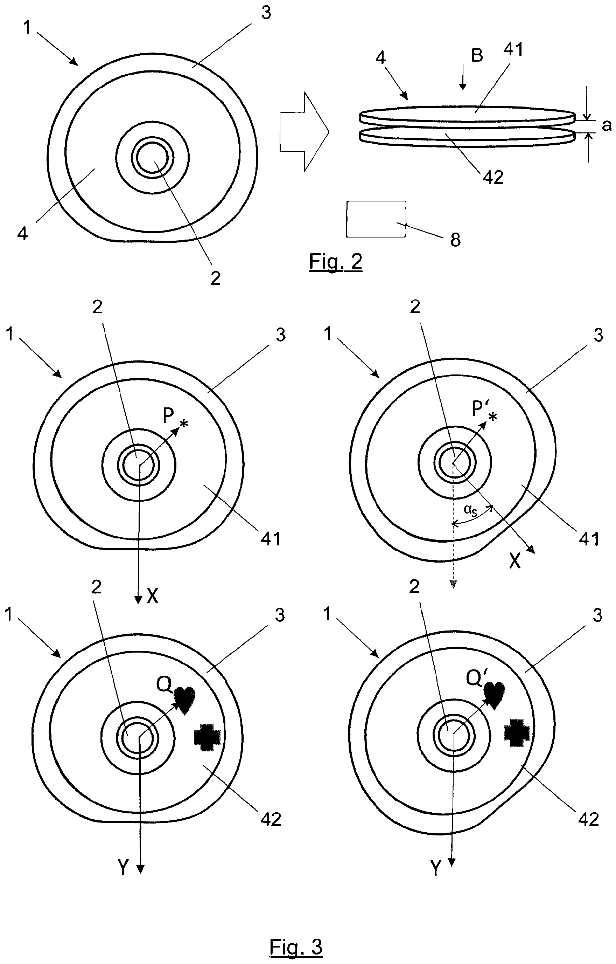

In der Darstellung der Figur 2 ist rein beispielhaft nochmals der aus Figur 1a bekannte Aufbau des Lenkrads 1 aufgegriffen. Auch dies dient lediglich der Veranschaulichung des nachfolgend ausgeführten und ließe sich selbstverständlich ebenso bei allen anderen Ausführungsvarianten des Displays 4 entsprechend gestalten. Das Display 4 ist rechts neben dem Lenkrad 1 nochmals in einer schematischen Darstellung gezeigt. Es besteht in Blickrichtung B einer das Lenkrad 1 bedienenden Person, was hier von unten nach oben dargestellt ist aus einer Bedienfläche 41 einerseits und einer darunter angeordneten Anzeigefläche 42 andererseits. Die Bedienfläche 41 und die Anzeigefläche 42 sind dabei um einen hier mit a bezeichneten Abstand beabstandet zueinander angeordnet. Dies ermöglicht einerseits Tiefeneffekte, um beispielsweise die Ansicht eines ansonsten ja beabstandet zum Lenkrad 1 liegenden Cockpits entsprechend zu simulieren und gleichzeitig die hinter der Bedienfläche 41 angezeigten Elemente über die Bedienfläche 41 bedienbar zu machen und erlaubt andererseits auch eine Rotation der Bedienfläche 41 gegenüber der Anzeigefläche 42. In diesem Fall, und dies ist die bevorzugte Variante dieses Aufbaus, ist die Bedienfläche 41 drehfest mit dem Lenkkranz 3 und der Nabe 2 des Lenkrads 1 verbunden, während die Anzeigefläche 42, ähnlich bei bisherigen Aufbauten die Bedienschalter für die Fahrtrichtungsanzeige, die Beleuchtung und dergleichen drehfest mit dem hinter der Nabe 2 liegenden Mantelrohr verbunden sind. Wird nun der Lenkkranz 3 des Lenkrads 1 zusammen mit der Nabe 2, also das gesamte Lenkrad 1 gedreht, dreht sich die Bedienfläche 41 mit dem Lenkrad 1 mit, während die Anzeigefläche 42 dahinter drehfest mit dem Mantelrohr verbunden ist und sich nicht mitdreht.

In der Darstellung der Figur 3 ist dies nochmals exemplarisch gezeigt. Die beiden Bilder oben zeigen das Lenkrad 1 in einer ersten und in einer zweiten Position, zwischen welchen der Winkel αₛ liegt. Ein auf der Bedienfläche 41, welche hier dargestellt ist, bedienbarer Punkt P lässt sich beispielsweise durch den Radius und den Winkel definieren. Dreht sich das Lenkrad 1 dann in die rechts daneben dargestellte Position, so hat sich die Lenkradrichtung x gegenüber der senkrechten Richtung um den Winkel αₛ verdreht. Der berührungssensitive Punkt P ist nun in eine andere Position gewandert.

Dies lässt sich jedoch bei bekanntem Drehwinkel αₛ entsprechend kompensieren, so dass bei der in der Figur 3 oben recht dargestellten Lenkradstellung der Punkt P' anstellte des Punkts P verwendet werden kann, um unabhängig von der erfolgen Drehung des Lenkrads 1 den berührungssensitiven Punkt an derselben Stelle zu halten.

In der Darstellung der Figur 3 unten ist derselbe Aufbau nochmals gezeigt, wobei hier die drehfest gegenüber dem Lenkrad 1 positionierte Anzeigefläche 42 dargestellt ist.

Unabhängig von der Drehung verbleiben die hier dargestellten Symbole in ihrer Position, so dass die Position Q und Q` des oberen Symbols dieselbe ist, auch wenn das Lenkrad 1 sich entsprechend gedreht hat. Ist nun das obere Symbol ein Symbol, welches bei einer Berührung der Bedienfläche 41 eine Bedienung auslösen soll, also beispielsweise ein virtueller Taster, dann würde ohne die Kompensation des berührungsempfindlichen Punkts von seiner Position P in seine Position P' hier keine oder eine falsche Taste betätigt werden, wenn die Bedienfläche 41 in der Darstellung der Figur 3 rechts oben entsprechend berührt wird. Durch die beschriebene Kompensation lässt sich dies entsprechend ausgleichen, so dass bei identischem Radius lediglich die Winkel entsprechend angepasst werden müssen, um so die Kompensation zu erreichen. Die Kompensation erfolgt dabei über eine in Figur 2 schematisch angedeutete Bediensteuerung 8.

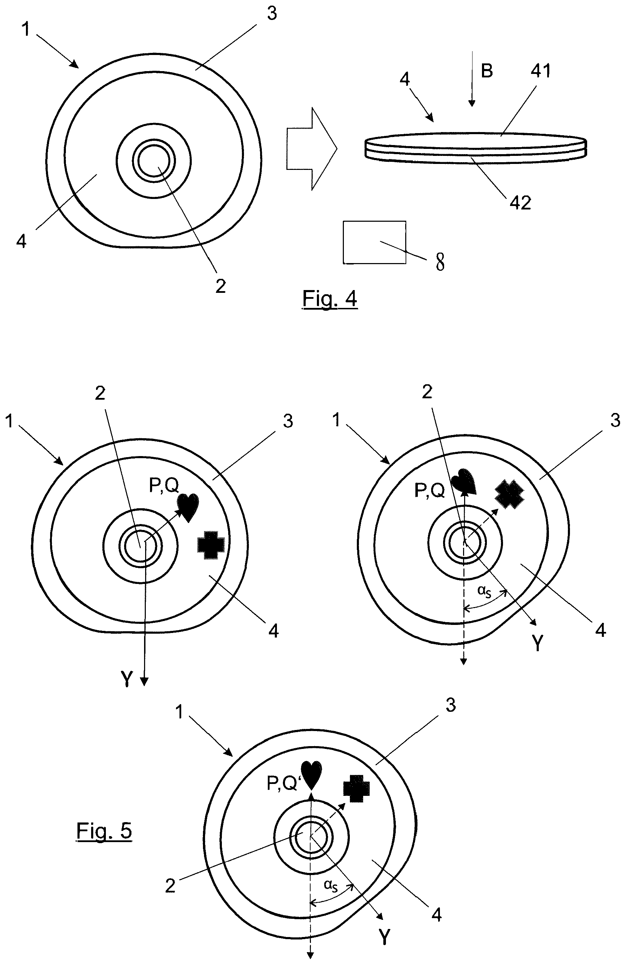

In der Darstellung der Figur 4 ist analog zur Darstellung in Figur 3 eine entsprechende Alternative des Aufbaus dargestellt. Auch hier sind wieder eine Bedienfläche 41 und eine Anzeigefläche 42 vorhanden. Diese haben einen Abstand a zueinander, wie oben ausgeführt.. In jedem Fall ist es hier so, dass das gesamte Display 4, also sowohl die Bedienfläche 41 als auch die Anzeigefläche 42 mit dem Lenkrad 1 mitbewegt werden.

Auch hier lassen sich, wie es prinzipiell aus dem Stand der Technik bekannt ist, die Position von Anzeige- und Bedienelementen entsprechend kompensieren, so dass sie unabhängig vom Drehwinkel des Lenkrads 1 immer an derselben Stelle sind, was vergleichbar funktioniert wie die Kompensation des Punkts P zum Punkt P', wie oben beschrieben. Die Kompensation erfolgt dabei über eine bereits zur Beschreibung in Fig. 4 genannte Bediensteuerung 8.

Alle oder einige der Bedienelemente können nun auch mit dem Lenkrad 1 mitgedreht werden, beispielsweise zumindest für einen vorgegebenen Drehwinkel des Lenkrads 1 von insbesondere bis zu 180°. Dieser Fall ist in der Darstellung der Figur 5 entsprechend angedeutet. Ganz rechts ist die Ausgangsposition gezeigt, wobei hier das gesamte Display 4, also sowohl die Bedienfläche 41 als auch die Anzeigefläche 42 entsprechend dargestellt sind. Wird das Lenkrad 1 nun entsprechend gedreht, wandern die beiden dargestellten Symbole mit, was insbesondere bei bedienbaren Symbolen durchaus erwünscht ist, um diese nicht in ihrer Position gegenüber dem Lenkkranz 3 und damit in ihrer Position gegenüber der Hand einer das Lenkrad 1 bedienenden Person zu verschieben. In der Praxis kommt es nun dazu, dass die Symbole, wie es in der Darstellung der Figur 5 in der Mitte erkennbar ist, entsprechend verkippen, da diese in ihrer Anordnung gegenüber dem Lenkkranz 3 quasi fix sind. Dementsprechend kann eine weitere Kompensation zum Tragen kommen, um diese Symbole entsprechend nachzudrehen, also ihre Ausrichtung gegenüber der Senkrechten trotz der erfolgten Drehung zu kompensieren, wie es in der Figur 5 ganz links zu erkennen ist.

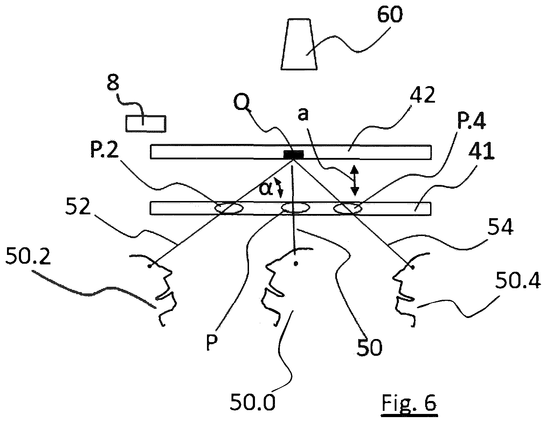

In Fig.6 ist eine Bedienfläche 41 gezeigt, die im Abstand a zu der Anzeigefläche 42 beabstandet angeordnet ist. Die Berührposition P.P" zur Bedienung eines auf der Anzeigefläche 42 dargestellten Bedienelementes Q wird dabei auf der Bedienfläche 41 derart angeordnet, dass diese in Blickrichtung 50, 52, 54 eines Nutzers liegt, der aus verschiedenen Position 50.0, 50.2 50.4 auf das Bedienelement Q die Anzeigefläche schaut, Ausgehend von einer keine Kompensation erfordernden neutralen Position 50.0, .d.h bei einer auf die Bedien- und Anzeigefläche 41, 42 senkrecht ausgerichteten Blickrichtung 50, wird beispielsweise bei einer veränderten Kopfposition 50.2 oder 50.4 die Berührposition von P nach P.2 bzw. P.4 nachgeführt, so dass diese in der Blickrichtung 52 bzw. 54 des Nutzers liegen. Die Veränderung der Kopfposition wird von einer Kamera ermittelt, wobei ausgehend von der Neutralposition 50.0 ein Offset der Berührposition ausgehend von der Position P bspw. aus Tabellen oder mittels einer die geometrische Anordnung wiedergebende Berechnungsformeln bestimmt wird.

Dargestellt ist eine Veränderung der Kopfposition in einer Ebene, für die Nachführung der Position P wird bevorzugt einer Veränderung der Kopfposition in allen Richtungen im Raum berücksichtigt. Alternativ kann die Blickrichtung nach dem Stand der Technik mittels Eyetracking bspw. über Korneale Reflexion bestimmt werden, so dass die Berührposition P entsprechend einer ermittelten Blickrichtungsänderung auf der Bedienfläche nachgeführt wird. Ermittelt wird hierzu ein in Blickrichtung liegendes, auf der Anzeigefläche 42 dargestellte Bedienelement Q und eine in Blickrichtung liegende berührempfindlichen Position P; P.2; P.4 auf der Bedienfläche 41, mittels der das Bedienelement Q bedient werden kann. Aus mittels der Kamera 60 in einem Koordinatensystem verorteten Kopfposition und der Position des Bedienelements in dem Koordinatensystem wird in der Bediensteuerung 8 eine Kopfposition relativ zu dem Bedienelement ermittelt. Ist die Blickrichtung auf das Bedienelement Q gerichtet, lässt sich der Winkel oder Blickrichtung zur Anzeige-. und Bedienfläche 41, 42 bestimmen.

Über den Abstand a lässt sich weiter die zur Kopfposition 50.0; 50.2; 50.4 zugehörige Bedienposition P; P.2; P.4 auf der Bedienfläche 41 dynamisch berechnen.

Alles in allem bietet ein solches berührungsempfindliches Display 4, welches zumindest in Teilen, hier insbesondere im oberen Abschnitt zwischen der Nabe 2 und dem Lenkkranz 3 angeordnet ist, entsprechende Vorteile bei der Bedienung des Lenkrads 1 bzw. des Fahrzeugs und ermöglicht so einen sehr komfortablen Aufbau des Lenkrads 1 für eine das Lenkrad 1 bedienende Person. Gleichzeitig werden weder Lenkkranz noch

Nabe in ihrer Funktionalität beeinträchtigt, so dass insbesondere im Bereich der Nabe 2 ein dort üblicher Airbag positioniert bleiben kann, so dass das neue Lenkrad 1 auch bezüglich der Sicherheit für eine das Lenkrad 1 nutzende Person ohne Abstriche ist.

## Patentansprüche

1. Lenkrad (1) mit einer gegenüber einem Mantelrohr drehbaren Nabe (2), mit einem um zumindest einen Teil des Umfangs verlaufenden drehfest mit der Nabe (2) verbundenen Lenkkranz (3), mit einem berührungsempfindlichen Display (4) und zugehöriger Bediensteuerung (8),
wobei das berührungsempfindliche Display (4) als ein ein- oder mehrteiliges Display (4) um zumindest einen Teil des Umfangs, zumindest bei der bei einer Gradeausfahrt oberen Lenkradhälfte, zwischen der Nabe (2) und dem Lenkkranz (3) angeordnet ist, wobei
das berührungsempfindliche Display (4) aus einer transparenten berührungsempfindlichen Bedienfläche (41 ausgebildet ist
**dadurch gekennzeichnet, dass**
das berührungsempfindliche Display (4) aus der transparenten berührungsempfindlichen Bedienfläche (41) und einer in Blickrichtung (B) auf das berührungsempfindliche Display (4) beabstandet dazu dahinter angeordneten Anzeigefläche (42) ausgebildet ist.

2. Lenkrad (1) nach Anspruch 1,
**dadurch gekennzeichnet, dass**
eine Bediensteuerung (8) eine Berührposition auf der Bedienfläche (41) einem Objekt auf der Anzeigefläche (42) derart zuordnet, dass unabhängig von einer Kopfposition eines Nutzers ein in Blickrichtung liegendes Objekt an einer in Blickrichtung liegenden Position der Bedienfläche (41) bedienbar ist.

3. Lenkrad (1) nach Anspruch 1 oder 2,
**dadurch gekennzeichnet, dass**
das Display (4) als Kreisring oder wenigstens ein Kreisringabschnitt konzentrisch zu der Nabe (2) und/oder dem Lenkkranz (3) ausgebildet ist.

4. Lenkrad (1) nach Anspruch 1 bis 3,
**dadurch gekennzeichnet, dass**
die Bedienfläche (41) drehfest mit dem Lenkkranz (3) und der Nabe (2) verbunden ist, und dass die Anzeigefläche (42) drehfest mit dem Mantelrohr verbunden ist.

5. Lenkrad (1) nach Anspruch 4,
**dadurch gekennzeichnet, dass**
die Bediensteuerung (8) dazu eingerichtet ist eine Änderung des Drehwinkels der Bedienfläche (41) gegenüber der Anzeigefläche (42) zu kompensieren, so dass eine Berührposition (P, P`) an der Bedienfläche (41) vom Drehwinkel (αS) unabhängig einer dahinter liegenden Anzeigeposition auf der Anzeigefläche (42) zuordenbar ist.

6. Lenkrad (1) nach Anspruch 1, 2 oder 3,
**dadurch gekennzeichnet, dass**
die Bedienfläche (41) und die Anzeigefläche des Displays (4) drehfest mit dem Lenkkranz (3) und der Nabe (2) verbunden sind.

7. Lenkrad (1) nach Anspruch 6,
**dadurch gekennzeichnet, dass**
die Bediensteuerung (8) dazu eingerichtet ist für zumindest einige auf der Anzeigefläche (42) des berührungsempfindlichen Displays (4) angezeigten Bedienelemente und/oder Anzeigeelemente eine Änderung des Drehwinkels (αS) des Lenkkranzes (3) zu kompensieren.

8. Lenkrad (1) nach einem der Ansprüche 1 bis 6,
**dadurch gekennzeichnet, dass**
die Bediensteuerung (8) dazu eingerichtet ist, zumindest einige auf der Anzeigefläche (42) des Displays (4) angezeigte Bedienelemente drehfest zu dem Lenkkranz (3) zu halten.

9. Lenkrad (1) nach Anspruch 8
**dadurch gekennzeichnet, dass**
die Bediensteuerung (8) die zum Lenkradkranz drehfest gehaltene, als Symbole ausgeführten Bedienelemente in Bezug auf eine von Sensoren am Lenkrad detektierten Berührposition auf der Anzeigefläche (42) in einem gleichbleibenden Abstand darstellt.

10. Lenkrad (1) nach Anspruch 8 oder 9 **dadurch gekennzeichnet, dass** die Bediensteuerung (8) die zum Lenkradkranz auf der Anzeigefläche (42) drehfest gehaltene, als Symbole ausgeführten Bedienelemente in ihrer Ausrichtung so dreht, dass eine Ausrichtung deren Symmetrielinien gegenüber einer Horizontalen konstant gehalten werden.

11. Lenkrad (1) nach Anspruch 8 bis 10, **dadurch gekennzeichnet, dass** die Bediensteuerung (8) ferner dazu eingerichtet ist, ab einem vorgegebenen Drehwinkel (αS), von insbesondere ab 180°, eine Kompensation des Drehwinkels (αS) für zumindest einige auf der Anzeigefläche (42) des berührungsempfindlichen Displays (4) bis zu diesem Drehwinkel ortsfest gehalten angezeigte Bedienelemente vorzunehmen.

12. Lenkrad (1) nach einem der Ansprüche 1 bis 11, **dadurch gekennzeichnet, dass** die Nabe (2) über wenigstens einen das berührungsempfindliche Display (4) durchbrechenden oder in diesem oder zwischen zwei Teilen desselben sichtbar verlaufenden Steg (5) mit dem Lenkkranz (3) verbunden ist.

13. Lenkrad (1) nach Anspruch 12, **dadurch gekennzeichnet, dass** auf dem wenigstens einen Steg (5) mechanische Schaltelemente (6) angeordnet sind.

14. Lenkrad (1) nach einem der Ansprüche 1 bis 13, **dadurch gekennzeichnet, dass** das berührungsempfindliche Display (4) mit einem Abstand (7) zu dem Lenkkranz (3) angeordnet ist, insbesondere einem Abstand (7), welcher für ein verbessertes Greifen des Lenkkranzes (3) durch eine Person ausreicht.

## Claims

1. Steering wheel (1) comprising a hub (2) which is rotatable with respect to a steering column jacket, a steering ring (3) which extends around at least part of the circumference and is connected to the hub (2) for conjoint rotation, and a touch-sensitive display (4) and associated operating controller (8),
the touch-sensitive display (4), as a single-part or multi-part display (4), being arranged around at least part of the circumference, at least between the hub (2) and the steering ring (3) in the steering wheel half that is the upper half when driving at degrees,
the touch-sensitive display (4) being made of a transparent touch-sensitive operating surface (41),
**characterized in that**
the touch-sensitive display (4) is formed from the transparent touch-sensitive operating surface (41) and a display surface (42) which is arranged behind said operating surface and at a distance therefrom in a viewing direction (B) toward the touch-sensitive display (4).

2. Steering wheel (1) according to claim 1,
**characterized in that**
an operating controller (8) assigns a touch position on the operating surface (41) to an object on the display surface (42) such that, irrespective of a head position of a user, an object lying in the viewing direction can be operated at a position of the operating surface (41) that lies in the viewing direction.

3. Steering wheel (1) according to either claim 1 or claim 2,
**characterized in that**
the display (4) is designed as a circular ring or at least one circular ring portion concentric to the hub (2) and/or the steering ring (3).

4. Steering wheel (1) according to claim 1 to claim 3,
**characterized in that**
the operating surface (41) is connected to the steering ring (3) and the hub (2) for conjoint rotation, **and in that** the display surface (42) is connected to the steering column jacket in a rotationally fixed manner.

5. Steering wheel (1) according to claim 4,
**characterized in that**
the operating controller (8) is designed to compensate for a change in the angle of rotation of the operating surface (41) relative to the display surface (42), so that a touch position (P, P') on the operating surface (41) can be assigned to a display position located behind it on the display surface (42) irrespective of an angle of rotation (αS).

6. Steering wheel (1) according to claim 1, 2 or 3,
**characterized in that**
the operating surface (41) and the display surface of the display (4) are connected to the steering ring (3) and the hub (2) for conjoint rotation.

7. Steering wheel (1) according to claim 6,
**characterized in that**
the operating controller (8) is designed to compensate for a change in the angle of rotation (αS) of the steering ring (3) for at least some operating elements and/or display elements displayed on the display surface (42) of the touch-sensitive display (4).

8. Steering wheel (1) according to any of claims 1 to 6,
**characterized in that**
the operating controller (8) is designed to hold at least some operating elements displayed on the display surface (42) of the display (4) in a rotationally fixed manner with respect to the steering ring (3).

9. Steering wheel (1) according to claim 8,
**characterized in that**
the operating controller (8) displays the operating elements that are held in a rotationally fixed manner with respect to the steering wheel rim and are designed as symbols at a constant distance in relation to a touch position on the display surface (42) that is detected by sensors on the steering wheel.

10. Steering wheel (1) according to either claim 8 or claim 9,
**characterized in that**
the operating controller (8) rotates the operating elements that are held on the display surface (42) in a rotationally fixed manner with respect to the steering wheel rim and are designed as symbols in their orientation such that an orientation of their lines of symmetry relative to a horizontal is kept constant.

11. Steering wheel (1) according to claim 8 to claim 10,
**characterized in that**
the operating controller (8), from a predetermined rotational angle (αS), in particular from 180°, is further designed to carry out a compensation of the rotational angle (αS) for at least some operating elements displayed on the display surface (42) of the touch-sensitive display (4) that are held in a stationary manner up to this angle of rotation.

12. Steering wheel (1) according to any of claims 1 to 11,
**characterized in that**
the hub (2) is connected to the steering ring (3) via at least one web (5) which penetrates the touch-sensitive display (4) or visibly extends in the display or between two parts thereof.

13. Steering wheel (1) according to claim 12,
**characterized in that**
mechanical switching elements (6) are arranged on the at least one web (5).

14. Steering wheel (1) according to any of claims 1 to 13,
**characterized in that**
the touch-sensitive display (4) is arranged at a distance (7) from the steering ring (3), in particular at a distance (7) that is sufficient for improved gripping of the steering ring (3) by a person.

## Revendications

1. Volant de direction (1) comportant un moyeu (2) pouvant tourner par rapport à un tube d'enveloppe, comportant une couronne de direction (3) s'étendant autour d'au moins une partie de la circonférence et reliée de manière solidaire en rotation au moyeu (2), comportant un écran (4) tactile et un dispositif de commande de manipulation (8) correspondant,
dans lequel l'écran (4) tactile est disposé en tant qu'écran (4) en une ou plusieurs parties entre le moyeu (2) et la couronne de direction (3) autour d'au moins une partie de la circonférence, au moins sur la moitié de volant de direction supérieure lors d'une conduite en degrés, dans lequel
l'écran (4) tactile est constitué d'une surface de manipulation tactile transparente (41)
**caractérisé en ce que**
l'écran (4) tactile est constitué de la surface de manipulation tactile transparente (41) et d'une surface d'affichage (42) disposée à distance de ladite surface de manipulation et derrière celle-ci dans la direction du regard (B) vers l'écran (4) tactile.

2. Volant de direction (1) selon la revendication 1,
**caractérisé en ce que**
un dispositif de commande de manipulation (8) associe une position de contact sur la surface de manipulation (41) à un objet sur la surface d'affichage (42) de sorte que, indépendamment d'une position de tête d'un utilisateur, un objet orienté dans la direction du regard peut être manipulé au niveau d'une position orientée dans la direction du regard de la surface de manipulation (41).

3. Volant de direction (1) selon la revendication 1 ou 2,
**caractérisé en ce que**
l'écran (4) est réalisé sous la forme d'un anneau circulaire ou d'au moins une section d'anneau circulaire concentrique par rapport au moyeu (2) et/ou à la couronne de direction (3).

4. Volant de direction (1) selon les revendications 1 à 3,
**caractérisé en ce que**
la surface de manipulation (41) est reliée de manière solidaire en rotation à la couronne de direction (3) et au moyeu (2), et **en ce que** la surface d'affichage (42) est reliée de manière solidaire en rotation au tube d'enveloppe.

5. Volant de direction (1) selon la revendication 4,
**caractérisé en ce que**
le dispositif de commande de manipulation (8) est configuré pour compenser une modification de l'angle de rotation de la surface de manipulation (41) par rapport à la surface d'affichage (42), de sorte qu'une position de contact (P, P') au niveau de la surface de manipulation (41) peut être associée à une position d'affichage située derrière celle-ci sur la surface d'affichage (42) indépendamment de l'angle de rotation (αS).

6. Volant de direction (1) selon la revendication 1, 2 ou 3,
**caractérisé en ce que**
la surface de manipulation (41) et la surface d'affichage de l'écran (4) sont reliées de manière solidaire en rotation à la couronne de direction (3) et au moyeu (2).

7. Volant de direction (1) selon la revendication 6,
**caractérisé en ce que**
le dispositif de commande de manipulation (8) est configuré pour compenser une modification de l'angle de rotation (αS) de la couronne de direction (3) pour au moins certains éléments de manipulation et/ou éléments d'affichage affichés sur la surface d'affichage (42) de l'écran (4) tactile.

8. Volant de direction (1) selon l'une des revendications 1 à 6,
**caractérisé en ce que**
le dispositif de commande de manipulation (8) est configuré pour maintenir au moins certains éléments de manipulation, affichés sur la surface d'affichage (42) de l'écran (4), de manière solidaire en rotation par rapport à la couronne de direction (3).

9. Volant de direction (1) selon la revendication 8,
**caractérisé en ce que**
le dispositif de commande de manipulation (8) représente les éléments de manipulation, maintenus de manière solidaire en rotation par rapport à la couronne de volant de direction et réalisés sous forme de symboles, à une distance constante par rapport à une position de contact, détectée par des capteurs sur le volant de direction, sur la surface d'affichage (42).

10. Volant de direction (1) selon la revendication 8 ou 9,
**caractérisé en ce que**
le dispositif de commande de manipulation (8) fait pivoter les éléments de manipulation, maintenus de manière solidaire en rotation par rapport à la couronne de volant de direction sur la surface d'affichage (42) et réalisés sous forme de symboles, dans leur orientation de sorte qu'une orientation de leurs lignes de symétrie par rapport à une ligne horizontale est maintenue constante.

11. Volant de direction (1) selon les revendications 8 à 10,
**caractérisé en ce que**
le dispositif de commande de manipulation (8) est également configuré pour effectuer, à partir d'un angle de rotation (αS) prédéterminé, en particulier à partir de 180°, une compensation de l'angle de rotation (αS) pour au moins certains éléments de manipulation affichés et maintenus de manière fixe sur la surface d'affichage (42) de l'écran (4) tactile jusqu'audit angle de rotation.

12. Volant de direction (1) selon l'une des revendications 1 à 11,
**caractérisé en ce que**
le moyeu (2) est relié à la couronne de direction (3) par l'intermédiaire d'au moins une traverse (5) traversant l'écran (4) tactile ou s'étendant visiblement dans celui-ci ou entre deux parties de celui-ci.

13. Volant de direction (1) selon la revendication 12,
**caractérisé en ce que**
des éléments de commutation (6) mécaniques sont disposés sur l'au moins une traverse (5).

14. Volant de direction (1) selon l'une des revendications 1 à 13,
**caractérisé en ce que**
l'écran (4) tactile est disposé à une certaine distance (7) par rapport à la couronne de direction (3), en particulier à une distance (7) suffisante pour une meilleure préhension de la couronne de direction (3) par une personne.
